# EUROPEAN PATENT SPECIFICATION

(11) **EP 4 233 412 B1**
(45) Date of publication and mention of the grant of the patent: **30.09.2026**
(21) Application number: 21789683.6
(22) Date of filing: 07.10.2021
(51) Int. Cl.: H04L 9/40, H04W 12/06, H04W 12/106, H04W 76/15

(54) **PAGING SIGNALLING MECHANISM**
PAGING-SIGNALISIERUNGSMECHANISMUS
MÉCANISME DE SIGNALISATION DE RADIOMESSAGERIE

(30) Priority: 22.10.2020 IN 202041046118
(43) Date of publication of application: 30.08.2023
(73) Proprietor: Nokia Technologies Oy, 02610 Espoo (FI)
(72) Inventor: SELVAGANAPATHY, Srinivasan, Bangalore-17 Bangalore 560017 (IN); ALI, Amaanat, 02250 Espoo (FI)
(74) Representative: Mudge, Kevin
(86) International application number: PCT/EP2021/077679
(87) International publication number: WO 2022/084053

(56) References cited:
- WO-A2-2020/056433
- "3rd Generation Partnership Project; Technical Specification Group Services and System Aspects; Study on system enablers for devices having multiple Universal Subscriber Identity Modules (USIM) (Release 17)", 28 January 2020 (2020-01-28), XP051845693, Retrieved from the Internet <URL:https://ftp.3gpp.org/tsg_sa/WG2_Arch/Latest_SA2_Specs/Latest_draft_S2_Specs/23761-030.zip 23761-030rm.doc> [retrieved on 20200128]
- HUAWEI ET AL: "Update ResumeMAC-I calculation", vol. SA WG3, no. Harbin (China); 20180924 - 20180928, 17 September 2018 (2018-09-17), XP051540919, Retrieved from the Internet <URL:http://www.3gpp.org/ftp/tsg%5Fsa/WG3%5FSecurity/TSGS3%5F92Bis%5FHarbin/Docs/S3%2D182852%2Ezip> [retrieved on 20180917]

## Description

### Field

The exemplary and non-limiting embodiments of the invention relate generally to wireless communication systems. Embodiments of the invention relate especially to apparatuses and methods in wireless communication networks.

### Background

Wireless communication systems are under constant development. One aspect under development is terminal devices having more than one subscription identities. There may be users who have the need to utilise more than one subscription in a same terminal device. For example, one subscription maybe for home use and another for work. Typically, while one subscription is active other subscriptions are inactive or idle. Signalling traffic between the network and the subscriptions of the terminal device should be handled in an efficient manner. Recent developments in the field of wireless communication systems for devices with multiple subscription identities are described in the 3rd Generation Partnership Project (3GPP), Technical Specification Group Services and System Aspects, "Study on system enablers for devices having multiple Universal Subscriber Identity Modules (USIM) (Release 17)", 3GPP TR 23.761. This document discloses procedures for handling paging and connection management in multi-USIM devices, including scenarios where a terminal device may receive paging messages for one subscription identity while maintaining a connected mode for another. However, this document does not disclose the use of a token for integrity protection or for indicating a busy status in RRC resume or setup requests. Further, updates to the calculation of ResumeMAC-I, which is used for integrity protection in RRC resume procedures, are described in the 3GPP document "Update ResumeMAC-I calculation", S3-182852. While this document addresses cryptographic aspects of message authentication for RRC connection resumption, it does not address multi-subscription scenarios or the use of a token to indicate that a terminal device is busy with another subscription identity.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there are provided apparatuses of claims 1 and 6.

According to another aspect of the present invention, there are provided methods of claims 10 and 11.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figures 1 and 2 illustrate examples of simplified system architecture of a communication system;
Figure 3 illustrates an example situation.
Figures 4 and 5 are flowcharts illustrating some embodiments; and
Figures 6 and 7 are signalling charts illustrating some embodiments; and
Figures 8, 9 and 10 illustrate simplified examples of apparatuses applying some embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a communication device, a base station, eNodeB, gNodeB, a distributed realisation of a base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

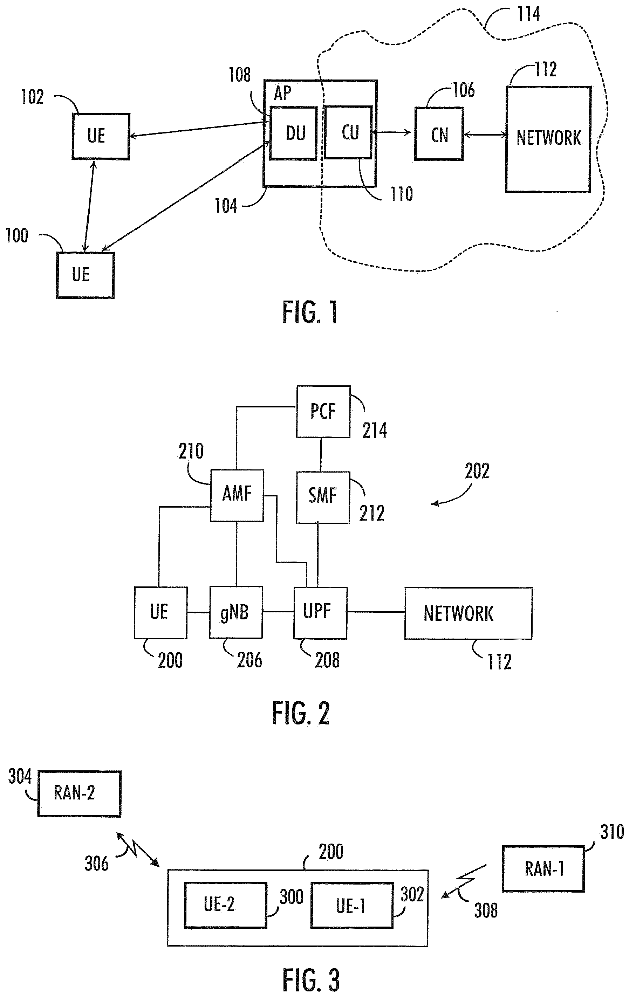

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one ore more external packet data networks, and to a mobile management entity (MME) or access mobility management function (AMF), for controlling access and mobility of the devices.

Exemplary embodiments of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or NodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 200 communicating via a 5G network 202 with a data network 112. The user terminal 200 is connected to a Radio Access Network RAN node, such as (e/g)NodeB 206 which provides the user terminal with a connection to the network 112 via one or more User Plane Functions, UPF 208. The user terminal 200 is further connected to Core Access and Mobility Management Function, AMF 210, which is responsible for handling connection and mobility management tasks and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function, PCF 214 which is configured to govern network behavior by providing policy rules to control plane functions.

Each terminal device (or user terminal, user equipment, UE) hardware has a unique identifier. The identifier may be denoted as the permanent equipment identifier, PEI, or international mobile equipment identifier, IMEI.

Terminal device wishing to utilise services of a wireless communication system such as a cellular network, needs to have a subscription from the operator of the communication system. Typically, a subscription is bounded to a physical Universal Subscriber Identity Module, USIM, card and the subscription can be identified by a unique subscription permanent identifier, SUPI, denoted also an international mobile subscriber identity, IMSI. SUPI consists of the mobile country code (MCC), mobile network code (MNC), and the mobile subscription identification number (MSIN).

There are also so-called embedded USIMs or electronic SIMs, eSIM, available. An eSIM is a digital USIM that allows the owner to activate a subscription to a communication system without having to use a physical USIM card.

In most cases, a terminal device has only one subscriber identity, stored in the USIM card inserted in the terminal. However, there are numerous terminal devices on the market which have more than one slot for USIM cards or eSIM support and are capable of supporting multiple subscriber identities. These terminal devices may be denoted as multi-USIM (MUSIM) devices.

A MUSIM terminal device registers to the one or more networks using one or more subscription identities stored in the respective USIMs. The subscription identities are associated with respective radio protocol stack instances, which can be in any of the Radio Resource Control, RRC, states RRC_IDLE, RRC_INACTIVE, or RRC_CONNECTED.

Fig. 3 illustrates an example situation. In this example, the terminal device 200 is a MUSIM device with two subscriber identities, UE-1 302 and UE-2 300. Assume that the UE-2 is in connected mode 306 for a Radio Access Network, RAN, RAN-2 304 and in idle mode or RRC-INACTIVE with UE-1 on RAN-1 310. RAN 1 and RAN 2 may refer to the same RAN; for instance if both subscriptions are handled by the same mobile operator.

The terminal device may be configured to momentarily interrupt communication with RAN-2 for monitoring for a possible paging in RAN-1. In case UE-1 receives paging message 308 from RAN-1, the terminal device should be able to indicate to RAN-1 that it is busy in with the other subscription identity. This will require the terminal device to establish an RRC connection in RAN-1 for transmitting a message that it is busy. This leads to an interruption for the UE-2 connection to RAN-2, additional to the short interruption for paging monitoring.

The terminal device can use a connection-less signalling by utilising so-called Msg3. Currently, a Msg3 transmission for RRC-Resume supports one spare bit that could be used for signalling that the terminal device is busy and cannot respond to the paging. However, this is not an optimal solution. With one bit it is not possible to convey information that the terminal device cannot respond to any possible further paging messages. Also, Msg3 content is not encrypted nor integrity protected, and can thus be easily spoofed by a malicious device.

Thus, a new signalling mechanism is proposed for better coordination for idle/inactive mode paging without the need for an RRC connection setup.

In an embodiment, a token, or a short identifier, for example a bit sequence of a given length, is allocated to the terminal device by the network which transmits the token to the terminal device. This token may then be utilised when the terminal device signals to the network that it will not respond to the paging message. In an embodiment, the signalling also conveys an indication of the reason why paging message is not responded to. This signalling can be realised without establishing an RRC connection to the network.

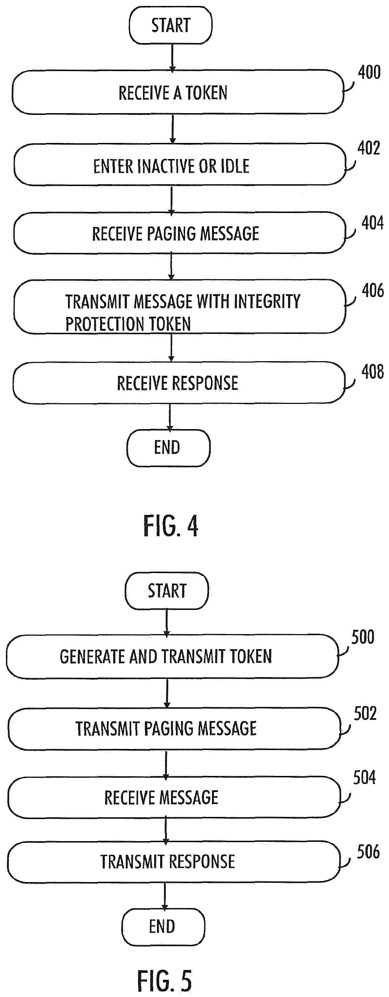

The flowchart of Fig. 4 illustrates an embodiment. The flowchart illustrates an example of the operation of an apparatus. In an embodiment, the apparatus may be a terminal device or a part of a terminal device.

In step 400, the terminal device is configured to receive a token from a network the terminal device is connected to for a first subscription identity used by the terminal device. The token may be received in a ciphered and integrity protected manner.

In step 402, the terminal device is configured to enter an inactive or idle state with the first subscription identity used by the terminal device.

In step 404, the terminal device is configured to receive a paging message from the network for the first subscription identity while maintaining a connected mode with a second subscription identity used by the terminal device.

In step 406, the terminal device is configured to transmit to the network, a message as part of a radio resource control, RRC, connection resumption or establishment procedure for the first subscription identity, the message comprising an integrity protection token generated based on the token and indicating that the terminal device is busy. It thus cannot complete a connection as a response to the paging message.

In an embodiment, the message is a radio resource connection resume request, and the token is a random bit sequence having a length of 16 bits.

In an embodiment, the message is a radio resource connection setup request, and the token is random bit sequence having a length of 23 bits.

In an embodiment, the message comprises a reason as why the terminal device is busy.

In step 408, the terminal device is configured to receive a response to the transmitted message, the response indicating that an RRC connection for the first subscription identity was not established or resumed.

The flowchart of Fig. 5 illustrates an embodiment. The flowchart illustrates an example of the operation of an apparatus. In an embodiment, the apparatus may be a network element such as an (e/g)NodeB of a Radio Access Network, RAN, for example, or a part of an (e/g)NodeB.

In step 500, the network element is configured to generate a token and transmit the token to a terminal device for a first subscription identity used by the terminal device.

In step 502, the network element is configured to transmit a paging message to the terminal device.

In step 504, the network element is configured to receive a message, from the terminal device, as a part of a radio resource control, RRC, connection resumption or establishment procedure, the message comprising an integrity protection token generated based on the token and indicating that the terminal device is busy.

In an embodiment, the message is a radio resource connection resume request, and the token is a random bit sequence having a length of 16 bits.

In an embodiment, the message is a radio resource connection setup request, and the token is random bit sequence having a length of 23 bits.

In step 506, the network element is configured to transmit a response to the message, the response indicating that an RRC connection was not established or resumed.

As mentioned, a subscription identity of a terminal device can be either in an inactive (RRC_INACTIVE) or an idle (RRC_IDLE) state or mode. Let us first study the case where a first subscription identity used by the terminal device is in RRC_INACTIVE.

In an embodiment, a RRC Resume message can be used to transmitting the integrity protection token indicating that the terminal device is busy. The structure of the known RRC Resume message is as follows:

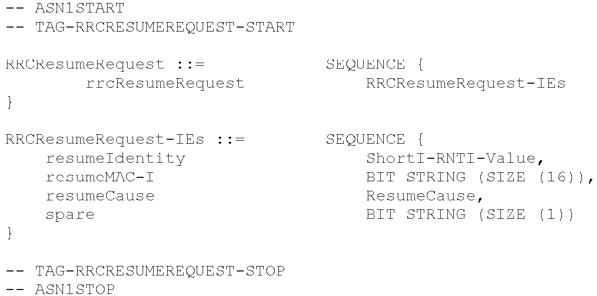

**The RRC Resume** message contains as an Information Element, IE, a Medium Access Control MAC value "resumeMAC-I" which is generated based on the following parameters to ensure the integrity of the RRC Resume message: Source C-RNTI (Cell Radio Network Temporary Identifier), Target Cell Identifier and Source Physical Cell-ID.

In an embodiment, the "resumeMAC-I" IE can be used for the purpose of transmitting the integrity protection token. It is possible to generate different short-MAC value if the input parameters are changed in the above. With both network and terminal devices side using new set of values it is possible to interpret the existing messages for different purpose in a secured way.

Further, in an embodiment, the "resumeCause" IE can be used in transmitting the cause of being busy and it may be renamed as BusyCause IE. An example of the BusyCause IE is as follows:

```
          -- ASN1START
          -- TAG-RESUMECAUSE-START
          BusyCause ::= ENUMERATED {busyInd, busyIndWithTimeout, busyIndWithAltDRX,
          busyIndWithActPagingFilters, busyCancelPagingResume, spare12, spare11, spare10, spare9,
 spare8, spare7, spare6, spare5, spare4, spare3, spare2, spare1}
          -- TAG-RESUMECAUSE-STOP
          -- ASNlSTOP
```

In an embodiment, the network is configured to set the token as a new 16-bit random or pseudo-random value and transmit the token to the terminal device.

If the first subscription of the terminal device then receives a paging message when it is handling active connection for a second subscription, the terminal device may then respond with an RRC-Resume-Request message with short-MAC generated based on this new token instead of source C-RNTI.

When the network receives the RRC-Resume-Request message, it may first verify the short-MAC using C-RNTI as input parameter. If it does not succeed, it will attempt to decode the message using the token. If it succeeds, the network may then interpret the cause values in different way as configured for the paging response (the resumeCause IE can signal up to 16 values in NR version Rel-16). Example values for cause indication may be as follows:
- BUSY indication
- BUSY with Timeout
- BUSY with modified DRX cycle for paging
- BUSY with activation of paging filters
- Paging Resume
- any future extended cause value.

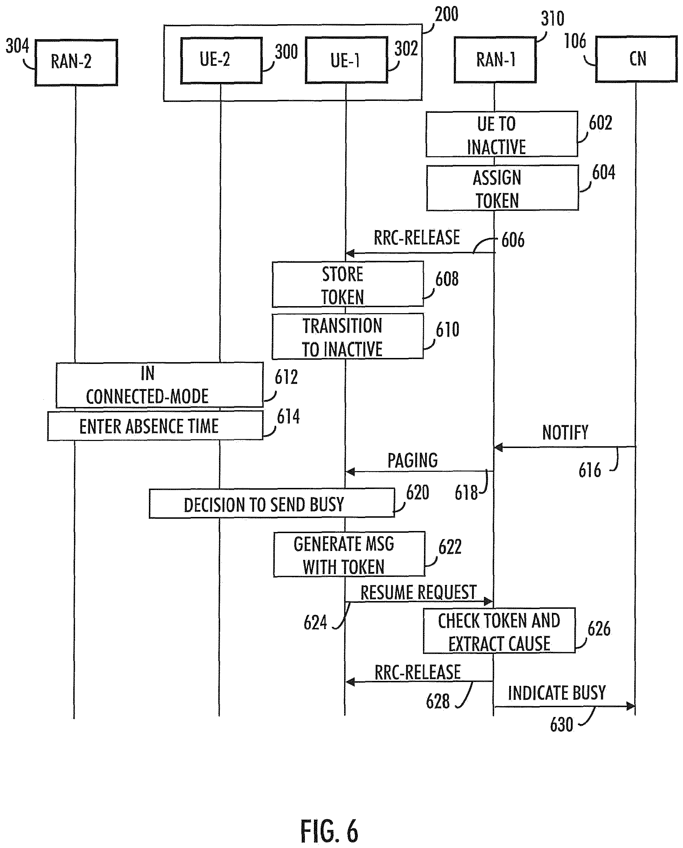

Fig. 6 is a signalling chart illustrating an example of signalling for a terminal device in RRC_INACTIVE mode. The chart illustrates an example of signalling between the terminal device 200 with two subscription identities UE-2 300 and UE-1 302, Radio Access Network RAN-2 304, Radio Access Network RAN-1 310 and Core Network 106.

In phase 602, RAN-1 decides to move the terminal device to RRC_INACTIVE mode.

In phase 604, RAN-1 assigns the terminal device a token as a 16-bit random or pseudo-random value for the purpose of connectionless busy indication.

The RAN-1 then requests the terminal device to move to RRC_INACTIVE using the RRC release message 606.

An example of possible information elements of the RRC release message used to convey the information is as follows:

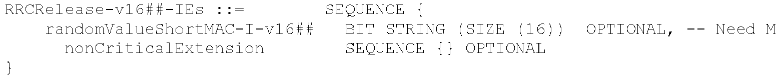

The first subscription identity UE-1 of the terminal device stores 608 the "16 bit random (or pseudo-random) value" and transitions 610 to RRC_INACTIVE.

A first subscription identity UE-1 of the terminal device is in RRC_INACTIVE while a second subscription identity UE-2 of the terminal device is in RRC_CONNECTED 612 with RAN-2. The first subscription identity UE-1 is monitoring the paging occasion based on negotiation by coordinating a temporary leave 614 with second subscription identity UE-2.

At some point of time, paging arrives at RAN-1 for UE-1 as a Downlink Packet Notification 616, and RAN-1 transmits 618 the paging.

The terminal device makes 620 a decision that it will not respond to the paging of RAN-1 by transitioning to that radio access network but instead informs the network that it is busy.

In an embodiment, the terminal device generates 622 a resumeMAC-I using the 16-bit random or pseudo-random value and Access Stratum security keying material. Also BusyCause IE may be assigned a value.

The terminal device then transmits 624 the resumeMAC-I and the BusyCause to the network using the modified RRCResumeRequest message.

RAN-1 is configured to check 626 the message for the token as mentioned above and also extract the BusyCause IE.

RAN-1 performs a contention resolution phase but does not continue with the RRC Resume procedure (hence this is a connectionless exchange i.e. one shot transfer of RRC Setup Request). In addition, a new token as a 16-bit random or pseudo-random value can be generated and sent 628 to the terminal device in a RRC Release message to prevent a replay attack on the resumeMAC-I which can take the new value into account. As the RRC Release 628 is encrypted, the new token remains a secret which only the terminal device can decode.

Finally, RAN-1 informs 630 the Core Network about the busy indication. The message may also carry the information passed by the terminal device with the BusyCause.

Let us next study the case where a first subscription identity used by the terminal device is in RRC_IDLE. For a terminal device in idle mode, to send a busy indication as a response to a paging message in secured way without increasing the Msg3 size, the Core Network and the terminal device can negotiate a Serving Temporary Mobile Subscriber Identity, S-TMSI to be used as a integrity protection token for a busy indication purpose, the token having a length of 23 bits. This short busy indication along with Integrity protection can fit into the 39 bit S-TMSI value, and the establishment cause may be used to indicate it is busy indication. The structure of the new RRCSetupRequest message is as follows:

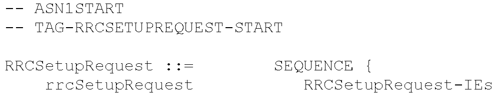

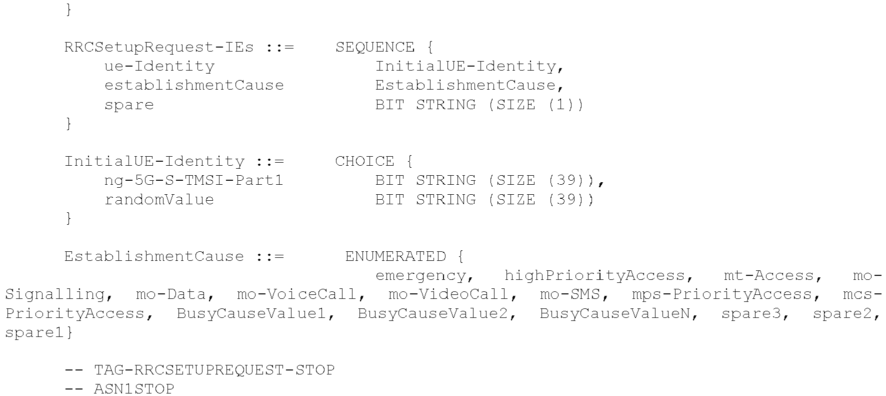

In an embodiment, as part of registration or any other Non-Access Stratum,NAS. signalling the terminal device is provided with a short-S-TMSI value for busy indication.

Then, when an idle mode terminal device intends to respond to paging message with busy indication it is configured to transmit a RRCSetupRequest with the given S-TMSI identifier and integrity protection based on NAS keys in the terminal device identifier. It also sets the establishment cause value equal to busy indication.

The RAN receives the message and is configured to forward the identifier part to the Core Network for verifying the integrity of busy indication and send the response received from the Core Network as Response to the terminal device in Msg4 in contention resolution identifier.

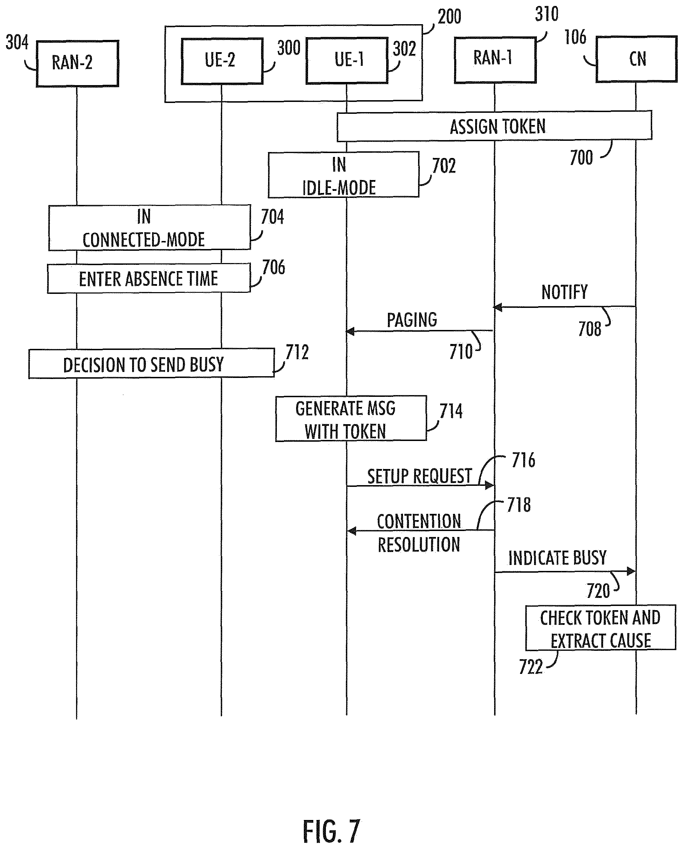

Fig. 7 is a signalling chart illustrating an example of signalling for a terminal device in RRC_IDLE mode. The chart illustrates an example of signalling between the terminal device 200 with two subscription identities UE-2 300 and UE-1 302, Radio Access Network RAN-2 302, Radio Access Network RAN-1 310 and Core Network 106.

In phase 700, the terminal device is assigned a short S-TMSI for the purpose of busy indication for a paging message. The first subscription UE-1 302 of the terminal device is in idle mode 702, while the second subscription 300 of the terminal device is in RRC_CONNECTED mode 704 with RAN-2.

The first subscription identity UE-1 is monitoring paging messages based on negotiation by coordinating a temporary leave 706 with second subscription identity UE-2.

At some point of time, a paging arrives 708 at RAN-1 for UE-1, and RAN-1 transmits 710 the paging.

The terminal device makes 712 a decision that it will not respond to paging of RAN-1 by transitioning to that radio access network but instead informs the network that it is busy.

The terminal device is configured to generate 714 a shortMAC using the S-TMSI and NAS security keying material. In an embodiment, to avoid replay attack of sending the same shortMAC again, a time dependent input to the shortMAC generation may be utilised (such as a System Frame Number SFN, SFN + slot number, for example). This ensures that any attacker cannot replay the same shortMAC.

In an embodiment, the terminal device concatenates the short MAC with the short S-TMSI (16 bits + 23 bits) to form the 39 bit number ng-5G-S-TMSI-Part1 in the RRCSetupRequest message described above, adds a BusyCauseValue and transmits 716 the message.

RAN-1 is configured to perform a contention resolution phase but it does not continue with the RRC Setup procedure (hence this is a connectionless exchange i.e. one shot transfer of RRC Setup Request) and transmits a response 718 to the terminal device.

RAN-1 is configured to inform 720 the Core Network 106 about the busy indication. The message may also carry the information passed by the terminal device with the BusyCauseValue.

The Core Network 106 RAN-1 is configured to check 720 the message for the token and also extract the BusyCauseValue.

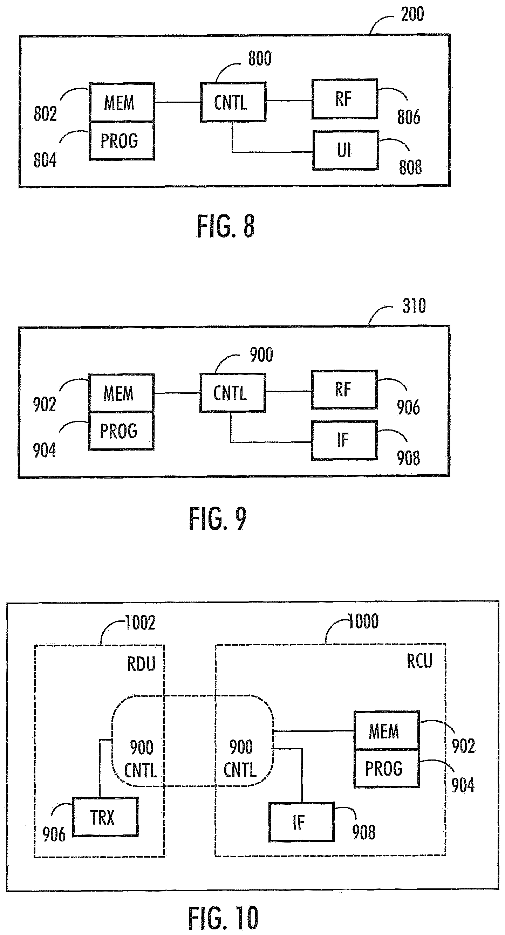

Figs 8, 9 and 10 illustrate an embodiment. The figures illustrate simplified examples of apparatuses applying embodiments of the invention. It should be understood that the apparatuses are depicted herein as examples illustrating some embodiments. It is apparent to a person skilled in the art that the apparatuses may also comprise other functions and/or structures and not all described functions and structures are required. Although the apparatuses have been depicted as one entity, different modules and memory may be implemented in one or more physical or logical entities.

Fig. 8 illustrates an embodiment. The figure illustrates a simplified example of an apparatus 200 applying embodiments of the invention. In some embodiments, the apparatus may be a terminal device or a part of a terminal device.

The apparatus 200 of the example includes a control circuitry 800 configured to control at least part of the operation of the apparatus.

The apparatus may comprise a memory 802 for storing data. Furthermore, the memory may store software 804 executable by the control circuitry 800. The memory may be integrated in the control circuitry.

The apparatus may comprise one or more interface circuitries 806, 808. The interface circuitries are operationally connected to the control circuitry 800. An interface circuitry 806 may be a set of transceivers configured to communicate with a RAN node, such as an (e/g)NodeB of a wireless communication network. The interface circuitry may be connected to an antenna arrangement (not shown). The apparatus may also comprise a connection to a transmitter instead of a transceiver. The apparatus may further comprise a user interface 808.

In an embodiment, the software 804 may comprise a computer program comprising program code means adapted to cause the control circuitry 800 of the apparatus to realise at least some of the embodiments described above.

Fig. 9 illustrates an embodiment. The figure illustrates a simplified example of an apparatus 310 applying embodiments of the invention. In some embodiments, the apparatus may be a network node or (e/g)NodeB, or a part of a network node or (e/g)NodeB.

The apparatus 310 of the example includes a control circuitry 900 configured to control at least part of the operation of the apparatus.

The apparatus may comprise a memory 902 for storing data. Furthermore, the memory may store software 904 executable by the control circuitry 900. The memory may be integrated in the control circuitry.

The apparatus may comprise one or more interface circuitries 906, 908. The interface circuitries are operationally connected to the control circuitry 900. An interface circuitry 906 may be a set of transceivers configured to communicate with terminal devices of a wireless communication network. The interface circuitry may be connected to an antenna arrangement (not shown). The apparatus may also comprise a connection to a transmitter instead of a transceiver. The interface 908 may connect the apparatus to other corresponding apparatuses or to core network, for example.

In an embodiment, the software 904 may comprise a computer program comprising program code means adapted to cause the control circuitry 900 of the apparatus to realise at least some of the embodiments described above.

In an embodiment, as shown in Fig. 10, at least some of the functionalities of the apparatus of Fig. 9 may be shared between two physically separate devices, forming one operational entity. Therefore, the apparatus may be seen to depict the operational entity comprising one or more physically separate devices for executing at least some of the described processes. Thus, the apparatus of Fig. 10, utilizing such shared architecture, may comprise a remote control unit RCU 1000, such as a host computer or a server computer, operatively coupled (e.g. via a wireless or wired network) to a remote distributed unit RDU 1002 located in the base station. In an embodiment, at least some of the described processes may be performed by the RCU 1000. In an embodiment, the execution of at least some of the described processes may be shared among the RDU 1002 and the RCU 1000.

In an embodiment, the RCU 1000 may generate a virtual network through which the RCU 1002 communicates with the RDU 1002. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus comprises at least one processor; and at least one memory including computer program code, the at least one memory and computer program code configured to, with the at least one processor, cause the apparatus to perform: receiving a token from a network for a first subscription identity used by the terminal device; entering an inactive or idle state for the first subscription identity; receiving a paging message from the network for the first subscription identity while maintaining a connected mode with a second subscription identity used by the terminal device; transmitting a message to the network, as part of a radio resource control, RRC, connection resumption or establishment procedure for the first subscription identity, the transmitted message comprising an integrity protection token generated based on the token and indicating that the terminal device is busy; receiving a response to the message, the response indicating that an RRC connection for the first subscription identity was not established or resumed.

In an embodiment, an apparatus comprises at least one processor; and at least one memory including computer program code, the at least one memory and computer program code configured to, with the at least one processor, cause the apparatus to perform: generating a token and transmit the token to a terminal device for a first subscription identity used by the terminal device; transmitting a paging message to the terminal device for the first subscription identity; receiving a message, from the terminal device, as a part of a radio resource control, RRC, resumption or establishment procedure for the first subscription identity, the message comprising an integrity protection token generated based on the token and indicating that the terminal device is busy, transmitting a response to the received message, the response indicating that an RRC connection for the first subscription identity was not established or resumed.

It will be obvious to a person skilled in the art that, as the technology advances, the inventive concept can be implemented in various ways. The invention and its embodiments are not limited to the examples described above but may vary within the scope of the claims.

## Claims

1. A terminal device comprising means configured to:
receive a token from a network for a first subscription identity used by the terminal device;
enter an inactive or idle state for the first subscription identity;
receive a paging message from the network for the first subscription identity while maintaining a connected mode with a second subscription identity used by the terminal device;
transmit a message to the network, as part of a radio resource control, RRC, connection resumption or establishment procedure for the first subscription identity, the message comprising an integrity protection token generated based on the token and indicating that the terminal device is busy;
receive a response to the transmitted message, the response indicating that an RRC connection for the first subscription identity was not established or resumed,
wherein the transmitted message is an RRC resume request message, and the token is a random bit sequence having a length of 16 bits or the transmitted message is an RRC setup request message, and the token is random bit sequence having a length of 23 bits.

2. The terminal device of claim 1, wherein the means are further configured to: further include in the transmitted message a reason as to why the terminal device is busy.

3. The terminal device of claim 1 or 2, wherein the means are further configured to: receive the token in a signalling message for the first subscription identity.

4. The terminal device of claim 1 or 2 , wherein the means are further configured to: receive the token in an RRC release message for the first subscription identity.

5. The terminal device of any preceding claim, wherein the means are further configured to: receive a new token in the response.

6. A network element comprising means configured to
generate a token and transmit the token to a terminal device for a first subscription identity used by the terminal device;
transmit a paging message to the terminal device for the first subscription identity;
receive a message, from the terminal device, as a part of a radio resource control, RRC, connection resumption or establishment procedure for the first subscription identity, the message comprising an integrity protection token generated based on the token and indicating that the terminal device is busy,
transmit a response to the received message, the response indicating that an RRC connection for the first subscription identity was not established or resumed, wherein the transmitted message is an RRC resume request message, and the token is a random bit sequence having a length of 16 bits or the transmitted message is an RRC setup request message, and the token is random bit sequence having a length of 23 bits .

7. The network element of claim 6, wherein the message further comprises a reason as to why the terminal device is busy.

8. The network element of claim 6 or 7, wherein the means are further configured to: transmit the token in an RRC release message.

9. The network element of any preceding claim 6 to 8, wherein the means are further configured to transmit a new token in the response.

10. A method in a terminal device, comprising:
receiving a token from a network for a first subscription identity used by the terminal device;
entering an inactive or idle state for the first subscription identity;
receiving a paging message from the network for the first subscription identity while maintaining a connected mode with a second subscription identity used by the terminal device;
transmitting a message to the network, as part of a radio resource control, RRC, connection resumption or establishment procedure for the first subscription identity, the message comprising an integrity protection token generated based on the token and indicating that the terminal device is busy;
receiving a response to the transmitted message, the response indicating that an RRC connection for the first subscription identity was not established or resumed, wherein the transmitted message is an RRC resume request message and the token is a random bit sequence having a length of 16 bits, or the transmitted message is an RRC setup request message, and the token is random bit sequence having a length of 23 bits.

11. A method in a network element, comprising:
generating a token and transmit the token to a terminal device for a first subscription identity used by the terminal device;
transmitting a paging message to the terminal device for the first subscription identity;
receiving a message, from the terminal device, as a part of a radio resource control, RRC, connection resumption or establishment procedure for the first subscription identity, the received message comprising an integrity protection token generated based on the token and indicating that the terminal device is busy,
transmitting a response to the received message, the response indicating that an RRC connection for the first subscription identity was not established or resumed, wherein the transmitted message is an RRC resume request message and the token is a random bit sequence having a length of 16 bits, or the transmitted message is an RRC setup request message, and the token is random bit sequence having a length of 23 bits.

## Patentansprüche

1. Endgerät, das Mittel umfasst, die konfiguriert sind zum:
Empfangen eines Tokens von einem Netzwerk für eine erste Teilnehmeridentität, die von dem Endgerät verwendet wird;
Eintreten in einen inaktiven oder Ruhezustand für die erste Teilnehmeridentität;
Empfangen einer Funkruf-Nachricht von dem Netzwerk für die erste Teilnehmeridentität, während ein verbundener Modus mit einer zweiten Teilnehmeridentität, die von dem Endgerät verwendet wird, aufrechterhalten wird;
Übertragen einer Nachricht an das Netzwerk, als Teil einer Verbindungswiederaufnahme- oder -aufbauprozedur einer Funkressourcensteuerung, RRC, für die erste Teilnehmeridentität, wobei die Nachricht einen Integritätsschutz-Token umfasst, der auf der Grundlage des Tokens erzeugt wird und angibt, dass das Endgerät beschäftigt ist;
Empfangen einer Antwort auf die übertragene Nachricht, wobei die Antwort angibt, dass eine RRC-Verbindung für die erste Teilnehmeridentität nicht aufgebaut oder wiederaufgenommen wurde,
wobei die übertragene Nachricht eine RRC-Wiederaufnahmeanforderungsnachricht ist und der Token eine zufällige Bitfolge mit einer Länge von 16 Bit ist, oder die übertragene Nachricht eine RRC-Aufbauanforderungsnachricht ist und der Token eine zufällige Bitfolge mit einer Länge von 23 Bit ist.

2. Endgerät nach Anspruch 1, wobei die Mittel ferner konfiguriert sind zum: ferner Aufnehmen, in die übertragene Nachricht, eines Grundes, warum das Endgerät beschäftigt ist.

3. Endgerät nach Anspruch 1 oder 2, wobei die Mittel ferner konfiguriert sind zum: Empfangen des Tokens in einer Signalisierungsnachricht für die erste Teilnehmeridentität.

4. Endgerät nach Anspruch 1 oder 2, wobei die Mittel ferner konfiguriert sind zum: Empfangen des Tokens in einer RRC-Freigabenachricht für die erste Teilnehmeridentität.

5. Endgerät nach einem der vorhergehenden Ansprüche, wobei die Mittel ferner konfiguriert sind zum: Empfangen eines neuen Tokens in der Antwort.

6. Netzwerkelement, das Mittel umfasst, die konfiguriert sind zum
Erzeugen eines Tokens und Übertragen des Tokens an ein Endgerät für eine erste Teilnehmeridentität, die von dem Endgerät verwendet wird;
Übertragen einer Funkruf-Nachricht an das Endgerät für die erste Teilnehmeridentität;
Empfangen einer Nachricht, von dem Endgerät, als Teil einer Verbindungswiederaufnahme- oder -aufbauprozedur einer Funkressourcensteuerung, RRC, für die erste Teilnehmeridentität, wobei die Nachricht einen Integritätsschutz-Token umfasst, der auf der Grundlage des Tokens erzeugt wird und angibt, dass das Endgerät beschäftigt ist,
Übertragen einer Antwort auf die empfangene Nachricht, wobei die Antwort angibt, dass eine RRC-Verbindung für die erste Teilnehmeridentität nicht aufgebaut oder wiederaufgenommen wurde, wobei die übertragene Nachricht eine RRC-Wiederaufnahmeanforderungsnachricht ist und der Token eine zufällige Bitfolge mit einer Länge von 16 Bit ist, oder die übertragene Nachricht eine RRC-Aufbauanforderungsnachricht ist und der Token eine zufällige Bitfolge mit einer Länge von 23 Bit ist.

7. Netzwerkelement nach Anspruch 6, wobei die Nachricht ferner einen Grund umfasst, warum das Endgerät beschäftigt ist.

8. Netzwerkelement nach Anspruch 6 oder 7, wobei die Mittel ferner konfiguriert sind zum: Übertragen des Tokens in einer RRC-Freigabenachricht.

9. Netzwerkelement nach einem der vorhergehenden Ansprüche 6 bis 8, wobei die Mittel ferner konfiguriert sind zum Übertragen eines neuen Tokens in der Antwort.

10. Verfahren in einem Endgerät, umfassend:
Empfangen eines Tokens von einem Netzwerk für eine erste Teilnehmeridentität, die von dem Endgerät verwendet wird;
Eintreten in einen inaktiven oder Ruhezustand für die erste Teilnehmeridentität;
Empfangen einer Funkruf-Nachricht von dem Netzwerk für die erste Teilnehmeridentität, während ein verbundener Modus mit einer zweiten Teilnehmeridentität, die von dem Endgerät verwendet wird, aufrechterhalten wird;
Übertragen einer Nachricht an das Netzwerk, als Teil einer Verbindungswiederaufnahme- oder -aufbauprozedur einer Funkressourcensteuerung, RRC, für die erste Teilnehmeridentität, wobei die Nachricht einen Integritätsschutz-Token umfasst, der auf der Grundlage des Tokens erzeugt wird und angibt, dass das Endgerät beschäftigt ist;
Empfangen einer Antwort auf die übertragene Nachricht, wobei die Antwort angibt, dass eine RRC-Verbindung für die erste Teilnehmeridentität nicht aufgebaut oder wiederaufgenommen wurde, wobei die übertragene Nachricht eine RRC-Wiederaufnahmeanforderungsnachricht ist und der Token eine zufällige Bitfolge mit einer Länge von 16 Bit ist, oder die übertragene Nachricht eine RRC-Aufbauanforderungsnachricht ist und der Token eine zufällige Bitfolge mit einer Länge von 23 Bit ist.

11. Verfahren in einem Netzwerkelement, umfassend:
Erzeugen eines Tokens und Übertragen des Tokens an ein Endgerät für eine erste Teilnehmeridentität, die von dem Endgerät verwendet wird;
Übertragen einer Funkruf-Nachricht an das Endgerät für die erste Teilnehmeridentität;
Empfangen einer Nachricht, von dem Endgerät, als Teil einer Verbindungswiederaufnahme- oder -aufbauprozedur einer Funkressourcensteuerung, RRC, für die erste Teilnehmeridentität, wobei die empfangene Nachricht einen Integritätsschutz-Token umfasst, der auf der Grundlage des Tokens erzeugt wird und angibt, dass das Endgerät beschäftigt ist,
Übertragen einer Antwort auf die empfangene Nachricht, wobei die Antwort angibt, dass eine RRC-Verbindung für die erste Teilnehmeridentität nicht aufgebaut oder wiederaufgenommen wurde, wobei die übertragene Nachricht eine RRC-Wiederaufnahmeanforderungsnachricht ist und der Token eine zufällige Bitfolge mit einer Länge von 16 Bit ist, oder die übertragene Nachricht eine RRC-Aufbauanforderungsnachricht ist und der Token eine zufällige Bitfolge mit einer Länge von 23 Bit ist.

## Revendications

1. Dispositif terminal comprenant des moyens configurés pour :
recevoir un jeton en provenance d'un réseau pour une première identité d'abonnement utilisée par le dispositif terminal ;
entrer dans un état inactif ou de repos pour la première identité d'abonnement ;
recevoir un message de radiomessagerie en provenance du réseau pour la première identité d'abonnement tout en maintenant un mode connecté avec une seconde identité d'abonnement utilisée par le dispositif terminal ;
transmettre un message au réseau, dans le cadre d'une procédure de reprise ou d'établissement de connexion de commande de ressources radio, RRC, pour la première identité d'abonnement, le message comprenant un jeton de protection d'intégrité généré sur la base du jeton et indiquant que le dispositif terminal est occupé ;
recevoir une réponse au message transmis, la réponse indiquant qu'une connexion RRC pour la première identité d'abonnement n'a pas été établie ou reprise,
le message transmis étant un message de demande de reprise RRC, et le jeton étant une séquence de bits aléatoire ayant une longueur de 16 bits, ou le message transmis étant un message de demande d'établissement RRC, et le jeton étant une séquence de bits aléatoire ayant une longueur de 23 bits.

2. Dispositif terminal selon la revendication 1, dans lequel les moyens sont en outre configurés pour : inclure en outre dans le message transmis une raison pour laquelle le dispositif terminal est occupé.

3. Dispositif terminal selon la revendication 1 ou 2, dans lequel les moyens sont en outre configurés pour : recevoir le jeton dans un message de signalisation pour la première identité d'abonnement.

4. Dispositif terminal selon la revendication 1 ou 2, dans lequel les moyens sont en outre configurés pour : recevoir le jeton dans un message de libération RRC pour la première identité d'abonnement.

5. Dispositif terminal selon l'une quelconque des revendications précédentes, dans lequel les moyens sont en outre configurés pour : recevoir un nouveau jeton dans la réponse.

6. Élément de réseau comprenant des moyens configurés pour
générer un jeton et transmettre le jeton à un dispositif terminal pour une première identité d'abonnement utilisée par le dispositif terminal ;
transmettre un message de radiomessagerie au dispositif terminal pour la première identité d'abonnement ;
recevoir un message, en provenance du dispositif terminal, dans le cadre d'une procédure de reprise ou d'établissement de connexion de commande de ressources radio, RRC, pour la première identité d'abonnement, le message comprenant un jeton de protection d'intégrité généré sur la base du jeton et indiquant que le dispositif terminal est occupé,
transmettre une réponse au message reçu, la réponse indiquant qu'une connexion RRC pour la première identité d'abonnement n'a pas été établie ou reprise, le message transmis étant un message de demande de reprise RRC, et le jeton étant une séquence de bits aléatoire ayant une longueur de 16 bits, ou le message transmis étant un message de demande d'établissement RRC, et le jeton étant une séquence de bits aléatoire ayant une longueur de 23 bits.

7. Élément de réseau selon la revendication 6, dans lequel le message comprend en outre une raison pour laquelle le dispositif terminal est occupé.

8. Élément de réseau selon la revendication 6 ou 7, dans lequel les moyens sont en outre configurés pour : transmettre le jeton dans un message de libération RRC.

9. Élément de réseau selon l'une quelconque des revendications précédentes 6 à 8, dans lequel les moyens sont en outre configurés pour transmettre un nouveau jeton dans la réponse.

10. Procédé dans un dispositif terminal, comprenant :
la réception d'un jeton en provenance d'un réseau pour une première identité d'abonnement utilisée par le dispositif terminal ;
l'entrée dans un état inactif ou de repos pour la première identité d'abonnement ;
la réception d'un message de radiomessagerie en provenance du réseau pour la première identité d'abonnement tout en maintenant un mode connecté avec une seconde identité d'abonnement utilisée par le dispositif terminal ;
la transmission d'un message au réseau, dans le cadre d'une procédure de reprise ou d'établissement de connexion de commande de ressources radio, RRC, pour la première identité d'abonnement, le message comprenant un jeton de protection d'intégrité généré sur la base du jeton et indiquant que le dispositif terminal est occupé ;
la réception d'une réponse au message transmis, la réponse indiquant qu'une connexion RRC pour la première identité d'abonnement n'a pas été établie ou reprise, le message transmis étant un message de demande de reprise RRC et le jeton étant une séquence de bits aléatoire ayant une longueur de 16 bits, ou le message transmis étant un message de demande d'établissement RRC, et le jeton étant une séquence de bits aléatoire ayant une longueur de 23 bits.

11. Procédé dans un élément de réseau, comprenant :
la génération d'un jeton et la transmission du jeton à un dispositif terminal pour une première identité d'abonnement utilisée par le dispositif terminal ;
la transmission d'un message de radiomessagerie au dispositif terminal pour la première identité d'abonnement ;
la réception d'un message, en provenance du dispositif terminal, dans le cadre d'une procédure de reprise ou d'établissement de connexion de commande de ressources radio, RRC, pour la première identité d'abonnement, le message reçu comprenant un jeton de protection d'intégrité généré sur la base du jeton et indiquant que le dispositif terminal est occupé,
la transmission d'une réponse au message reçu, la réponse indiquant qu'une connexion RRC pour la première identité d'abonnement n'a pas été établie ou reprise, le message transmis étant un message de demande de reprise RRC et le jeton étant une séquence de bits aléatoire ayant une longueur de 16 bits, ou le message transmis étant un message de demande d'établissement RRC, et le jeton étant une séquence de bits aléatoire ayant une longueur de 23 bits.
